# EUROPÄISCHE PATENTSCHRIFT

(11) **EP 1 667 300 B1**
(45) Veröffentlichungstag und Bekanntmachung des Hinweises auf die Patenterteilung: **19.03.2014**
(21) Anmeldenummer: 04405751.1
(22) Anmeldetag: 03.12.2004
(51) Int. Cl.: H02G 5/10

(54) **Hochspannungsanlage und Hochleistungsschalter mit Kühlung**
High-voltage switchgear with cooling means
Appareillage à haute-tension avec refroidissement

(43) Veröffentlichungstag der Anmeldung: 07.06.2006
(73) Patentinhaber: ABB Research Ltd., 8050 Zürich (CH)
(72) Erfinder: Chartouni, Daniel, 5400 Baden (CH); Lakner, Martin, 5413 Birmenstorf (CH); Mauroux, Jean-Claude, 5502 Hunzenschwil (CH); Schoenemann, Thomas, 5503 Schafisheim (CH); Kiefer, Jochen, CH- 5412 Nussbaumen (CH); Zehnder, Lukas, 5405 Baden-Dättwil (CH); Mollenkopf, Marc, CH-4127 Birsfelden (CH)
(74) Vertreter: ABB Patent Attorneys

(56) Entgegenhaltungen:
- DE-A1- 2 051 150
- US-A- 3 769 551
- US-A- 4 378 461

## Beschreibung

### Technisches Gebiet

Die Erfindung bezieht sich auf das Gebiet der Hochleistungsschaltertechnik. Sie bezieht sich auf eine Hochspannungsanlage und einen Hochleistungsschalter und ein Verfahren zum Kühlen eines Innenleiters eines Hochleistungsschalters gemäss dem Oberbegriff der unabhängigen Patentansprüche.

### Stand der Technik

Aus K. Albert et al., Elektrischer Eigenbedarf / Energietechnik in Kraftwerken und Industrie, VDE-Verlag, ISBN 3-8007-1586-4, Kapitel 10.3 (Seiten 431-455) sind Generatorableitungen mit forcierter Kühlung (auch als längsbeblasene oder luftgekühlte Generatorableitungen bezeichnbar) bekannt. Zwei im wesentlichen koaxial verlaufende rohrförmige Leiter bilden einen Innenleiter und einen diesen gehäuseartig umgebenden Aussenleiter, welche eine elektrische Verbindung zwischen einem Generator und einem Block- oder Maschinentransformator herstellen. Der Aussenleiter führt einen dem im Innenleiter fliessenden Strom entgegengesetzten Rückstrom. Zur Kühlung des dauerhaft mit typischerweise 20 kA bis 25 kA beaufschlagten Innenleiters wird mittels Gebläsen ein entlang dem Innenleiter verlaufender Luftstrom erzeugt. In der Generatorableitung ist ein Generatorschalter vorgesehen.

Weiterhin ist aus EP 1 022 830 A1 bekannt, zur Kühlung eines gehäusten Innenleiters eines Hochleistungsschalters Gebläse vorgesehen, durch welche eine den Innenleiter im wesentlichen senkrecht zu dessen Erstreckung umströmende Zirkularströmung erzeugt wird. Das derart zirkulierte Gas nimmt Verlustwärme des Innenleiters auf und gibt diese dann an der Innenseite des Gehäuses ab. Das Gehäuse wiederum gibt Wärme an die Umgebungsluft ausserhalb des Gehäuses ab. Durch die Kühlung des Innenleiters wird eine erhöhte Stromtragfähigkeit erreicht.

DE 20 51 150 A1 offenbart ein Wärmerohr zur Kühlung eines elektrischen Schalterpoles, welcher durch einen stromdurchflossenen Innenleiter erwärmt wird. Der Verdampfer des Wärmerohres umschliesst und koppelt thermisch an eine den Innenleiter umgebende Kapselung an. Das verdampfte Kühlmittel wird im Kondensator des Wärmerohres ausserhalb des Schalterpoles kondensiert.

Es ist wünschenswert, einen Hochleistungsschalter und eine einen Hochleistungsschalter beinhaltenden Hochspannungsanlage mit grösserer Stromtragfähigkeit sowie ein entsprechendes Verfahren zur Kühlung eines Innenleiters eines Hochleistungsschalters zu schaffen.

### Darstellung der Erfindung

Es ist deshalb Aufgabe der Erfindung, eine Hochspannungsanlage, einen Hochleistungsschalter und ein Verfahren zum Kühlen eines Innenleiters eines Hochleistungsschalters der eingangs genannten Art zu schaffen, welche eine erhöhte Stromtragfähigkeit aufweisen.

Diese Aufgabe lösen Vorrichtungen und ein Verfahren mit den Merkmalen der unabhängigen Patentansprüche.

Ein Hochleistungsschalter, dessen Innenleiter (auch als Aktivteil bezeichnbar) gekühlt wird, kann unter Einhaltung von durch einschlägige Normen vorgegebenen Temperatur-Grenzwerten höhere Ströme tragen als ein ungekühlter Hochleistungsschalter. Die Stromtragfähigkeit eines Hochleistungsschalters kann also umso mehr erhöht werden je effizienter eine vorgesehene Kühlvorrichtung die am Innenleiter entstehende Verlustwärme abzuführen vermag.

Anspruch 13 beschreibt einen Hochspannungsschalter gemäss der Erfindung.

Eine erfindungsgemässe Hochspannungsanlage weist mindestens eine Zuleitung und mindestens einen Hochleistungsschalter gemäss Anspruch 13 auf, wobei die mindestens eine Zuleitung einen länglich erstreckten Zuleitungs-Innenleiter und einen den Zuleitungs-Innenleiter (vorteilhaft gehäuseartig) umgebenden Zuleitungs-Aussenleiter aufweist, und wobei der Hochleistungsschalter einen länglich erstreckten Schalter-Innenleiter und einen den Schalter-Innenleiter gehäuseartig umgebenden Schalter-Aussenleiter aufweist. Die Innenleiter sind miteinander und die Aussenleiter sind miteinander elektrisch leitend verbunden. Zum Abführen von Wärmeenergie mindestens eines der Innenleiter, insbesondere des Schalter-Innenleiters, ist mindestens ein Wärmerohr mit einem als Verdampfer und einem als Kondensator bezeichneten Abschnitt vorgesehen.

Die Hochspannungsanlage ist dadurch gekennzeichnet, dass der Kondensator zum Zusammenwirken mit einem innerhalb des Schalter-Aussenleiters verlaufenden Kühlgasstrom vorgesehen ist.

Ein Wärmerohr (auch als Heat Pipe bekannt) ist ein Mittel zum Abführen der Wärme durch Verdampfen eines Arbeitsmediums in einem als Verdampfer bezeichneten Abschnitt des Wärmerohres und Kondensieren des Arbeitsmediums in einem als Kondensator bezeichneten Abschnitt des Wärmerohres, wobei Mittel zur Rückführung des Arbeitsmediums vom Kondensator zum Verdampfer vorgesehen sind. Vorteilhaft ist das Wärmerohr hermetisch geschlossen, so dass ein geschlossener Kreislauf darin entstehen kann. Eine längliche oder röhrenartige Form des Wärmerohrs ist vorteilhaft, aber nicht notwendig. Als Mittel zur Rückführung des Arbeitsmediums vom Kondensator zum Verdampfer kann einfach ein Hohlkörper genommen und so angeordnet werden, dass durch die Gravitation das flüssige Arbeitsmedium zurückgeführt werden, oder es kann auch ein Material verwendet werden, dass den Rücktransport durch Kapillarkräfte bewirkt.

Ein solches Wärmerohr kann in dem Raum zwischen Schalter-Innenleiter und Schalter-Aussenleiter angeordnet sein, in welchem Falle auf eine zwischen Verdampfer und Kondensator angeordnete Isolierstrecke verzichtet werden kann. Vorteilhaft kann das Wärmerohr im wesentlichen auf dem Potential des Innenleiters liegen.

Ein Wärmerohr ist eine passive Kühlvorrichtung. Es bedarf keiner Stromzufuhr oder einer anderen Versorgung. Als ein Kühlsystem mit einem hermetisch geschlossenen Kreislauf bedarf es in der Regel keiner Wartung und kann im allgemeinen über Jahre und Jahrzehnte wartungsfrei funktionieren.

Der Zuleitungs-Innenleiter und der Schalter-Innenleiter ist im allgemeinen rohrförmig oder hohlzylindrisch ausgebildet. Der jeweilige, den Rückstrom führende Aussenleiter bildet eine Kapselung, die im allgemeinen geerdet ist. Im Betriebsfall liegt zwischen dem Innenleiter und dem Aussenleiter eine Hochspannung an.

Für einen Hochleistungsschalter und die Zuleitungen sind die Nennspannungen grösser als 1 kV oder eher von der Grössenordnung 10 kV, oder sie betragen mehrere 10 kV bis mehrere 100 kV. Überspannungen (durch Blitzstösse) liegen typischerweise bei 100 kV bis mehreren 100 kV. Die Ströme und Rückströme sind von der Grössenordnung 1 kA oder 10 kA (Nennstrom), oftmals 20 kA bis 30 kA; die Kurzschlusströme sind etwa eine Grössenordnung grösser. Ein Hochleistungsschalter und entsprechende Zuleitungen sind für Leistungen der Grössenordnung 100 kW oder mehrere 100 MW oder bis im Gigawatt-Bereich ausgelegt. Solche Ströme, Spannungen und Leistungen bedingen eine bauliche Realisierung und eine Symmetrie des Aufbaus des Hochleistungsschalters und von Zuleitungen, wie sie beispielsweise für Mittelspannungs- oder Niederspannungsschalter nicht notwendig sind. Durch diesen Aufbau können ausserhalb der Hochspannungsanlage auftretende, durch die grossen Stöme hervorgerufene Magnetfelder sehr kleingehalten werden.

Die abzuführende Wärme entsteht im wesentlichen durch ohmsche Verluste im Innenleiter. Es können beispielsweise auch noch weitere Verluste hinzukommen, wie solche durch den Skineffekt, oder Wirbelstrom- und Hystereseverluste.

Vorteilhaft ist mindestens ein Kühlgasstromerzeugungsmittel vorgesehen, mittels dessen innerhalb des Schalter-Aussenleiters ein im wesentlichen entlang der Erstreckung des Schalter-Innenleiters verlaufender Kühlgasstrom, insbesondere ein Luftstrom, erzeugbar ist. Besonders vorteilhaft ist mindestens ein Kühlgasstromerzeugungsmittel vorgesehen, mittels dessen in dem Raum zwischen dem Schalter-Innenleiter und dem Schalter-Aussenleiter ein im wesentlichen entlang der Erstreckung des Schalter-Innenleiters verlaufender Kühlgasstrom, insbesondere ein Luftstrom, erzeugbar ist. Durch eine forcierte Kühlung kann eine deutlich vergrösserte Stromtragfähigkeit erreicht werden.

Besonders vorteilhaft wirkt der Kondensator mit dem Kühlgasstrom zusammen. Dadurch kann eine sehr effiziente Kühlung des Schalter-Innenleiters erreicht werden, da durch die Kühlgaskühlung des Kondensators dieser auf niedriger Temperatur gehalten werden kann, wodurch ein effizientes Kondensieren des Arbeitsgases und somit ein hoher Wirkungsgrad des Wärmerohres erzielt werden kann.

Ebenfalls besonders vorteilhaft steht der Verdampfer in engem thermischen Kontakt mit dem Schalter-Innenleiter. Dadurch kann besonders viel Verlustwärme des Innenleiters abgeführt werden.

Vorteilhaft weist der Kondensator eine Vorrichtung zur Wärmeabgabe auf. Diese kann beispielsweise eine Kühlrippenanordnung beinhalten. Insbesondere können einige oder alle der Kühlrippen der Kühlrippenanordnung im wesentlichen entlang der Erstreckung des Schalter-Innenleiters verlaufend sein. Mit grossem Vorteil wirkt die Vorrichtung zur Wärmeabgabe mit dem Kühlgasstrom zusammen.

Vorteilhaft verläuft der Kühlgasstrom innerhalb des Schalter-Aussenleiters und innerhalb des Zuleitungs-Aussenleiters. Besonders vorteilhaft verläuft der Kühlgasstrom in dem Raum zwischen dem Schalter-Innenleiter und dem Schalter-Aussenleiter und in dem Raum zwischen dem Zuleitungs-Innenleiter und dem Zuleitungs-Aussenleiter. Vorteilhaft verläuft der Kühlgasstrom im wesentlichen entlang der Erstreckung des jeweiligen Innenleiters.

Bevorzugt sind der Innenleiter sowie der Zuleitungs-Aussenleiter im wesentlichen hohlzylindrisch ausgebildet. Auch der Schalter-Aussenleiter kann im wesentlichen hohlzylindrisch ausgebildet sein. Vorteilhaft ist der Schalter-Innenleiter zu dem Schalter-Aussenleiter und/oder der Zuleitungs-Innenleiter zu dem Zuleitungs-Aussenleiter im wesentlichen koaxial verlaufend.

Bevorzugt weist die Hochspannungsanlage mehrere, insbesondere drei Pole auf mit jeweils mindestens einer Zuleitung, insbesondere zwei Zuleitungen, und jeweils mindestens einem Hochleistungsschalterpol. Jeder Hochleistungsschalterpol weist mindestens ein Wärmerohr auf. Die Schalterpole können zusammengefasst als Hochleistungsschalter bezeichnet werden.

Die Hochspannungsanlage kann vorteilhaft eine Generatorableitung, insbesondere eine Generatorabkitung mit forcierter Kühlung sein.

Ein erfindungsgemässer Hochleistungsschalter mit einem länglich erstreckten Schalter-Innenleiter und einem gehäuseartig den Schalter-Innenleiter umgebenden Schalter-Aussenleiter ist dadurch gekennzeichnet, dass zum Abführen von Wärmeenergie des Schalter-Innenleiters mindestens ein Wärmerohr vorgesehen ist, welches Wärmerohr ein Arbeitsmedium zum Abführen der Wärmeenergie durch Verdampfen des Arbeitsmediums in einem als Verdampfer bezeichneten Abschnitt des Wärmerohres und Kondensieren des Arbeitsmediums in einem als Kondensator bezeichneten Abschnitt des Wärmerohres beinhaltet, und wobei der Kondensator zum Zusammenwirken mit einem innerhalb des Schalter-Aussenleiters verlaufenden Kühlgasstrom vorgesehen ist. Besonders vorteilhaft ist der Kondensator zum Zusammenwirken mit einem in dem Raum zwischen dem Schalter-Innenleiter und dem Schalter-Aussenleiter verlaufenden Kühlgasstrom vorgesehen.

Eine verbesserte Kühlung des Innenleiters und eine erhöhte Stromtragfähigkeit wird erreicht.

Das erfindungsgemässe Verfahren zum Kühlen eines länglich erstreckten und von einem Schalter-Aussenleiter gehäuseartig umgebenen Schalter-Innenleiters eines Hochleistungsschalters ist dadurch gekennzeichnet, dass ein Arbeitsmedium durch Aufnahme von Wärmeenergie des Schalter-Innenleiters verdampft wird und unter Abgabe von Wärme in einem als Kondensator bezeichneten Abschnitt des Wärmerohres kondensiert wird, wobei der Kondensator innerhalb des Schalter-Aussenleiters durch einen im wesentlichen entlang der Erstreckung des Schalter-Innenleiters verlaufenden Kühlgasstrom gekühlt wird. Vorteilhaft wird der Kondensator in dem Raum zwischen dem Schalter-Innenleiter und dem Schalter-Aussenleiter durch einen im wesentlichen entlang der Erstreckung des Schalter-Innenleiters verlaufenden Kühlgasstrom gekühlt.

In einer vorteilhaften Ausführungsform ist das Wärmerohr als ein Thermosiphon ausgebildet. Bei einem als Thermosiphon ausgestalteten Wärmerohr findet der Rücktransport des kondensierten Arbeitsmediums (vorwiegend) durch die Gravitation statt. Somit ist der Kondensator (im Gravitationsfeld) höher angeordnet als der Verdampfer, und zwischen diesen muss entlang des Wärmerohres ein monotones Gefälle sein.

In einer weiteren vorteilhaften Ausführungsform beinhaltet das Wärmerohr ein Mittel zur Rückführung von kondensiertem Arbeitsmedium zum Verdampfer durch Kapillarkräfte. Eine solche Ausführungsform wird vorzugsweise dann eingesetzt, wenn der Kondensator unterhalb von dem Verdampfer angeordnet ist; sie kann aber auch in Verbindung mit einem Thermosiphon eingesetzt werden. Als Mittel zur Rückführung von kondensiertem Arbeitsmedium zum Verdampfer durch Kapillarkräfte kommen beispielsweise poröse Materialien in Frage. Netzartig strukturierte und/oder gewebeartige Materialien sind ebenfalls geeignet. Vorzugsweise sind solche Mittel an der Innenfläche des Wärmerohrs vorgesehen. Je nachdem, ob eine Isolationsstrecke zwischen Verdampfer und Kondensator gebildet werden soll oder nicht, kommen nur elektrisch isolierende Materialien oder auch elektrisch leitfähige Materialien in Frage.

In einer anderen vorteilhaften Ausführungsform ist der Verdampfer in den Innenleiter integriert. Beispielsweise kann der Innenleiter derart gestaltet sein, dass er ein oder mehrere Volumina beinhaltet, welche einen Teil des Wärmerohrs darstellen und ganz oder teilweise mit Arbeitsmedium gefüllt sind. Dadurch ist eine sehr gute thermische Kopplung zwischen Wärmerohr und Innenleiter gegeben.

Vorteilhaft kann der Innenleiter mehrere Abschnitte aufweisen, die jeweils mit mindestens einem Wärmerohr versehen sind. Besonders bei sehr langen Schaltern oder Zuleitungen mit langen Innenleitern ist dadurch, dass entlang der Längserstreckung des Innenleiters mehreren in Längsrichtung hintereinander angeordneten Abschnitten des Hochleistungsschalters oder der Zuleitung je mindestens ein Wärmerohr zugeordnet ist, eine sehr effiziente Kühlung möglich.

In einer bevorzugten Ausführungsform ist der Hochleistungsschalter ein Generatorschalter.

Die Erfindung kann auch darin gesehen werden, dass eine Hochspannungsanlage mit mindestens einer Zuleitung und/oder mindestens einem Hochleistungsschalter geschaffen wird, die in einer Zuleitung und/oder in einem Hochleistungsschalter mindestens ein Wärmerohr aufweist, das der Kühlung eines Innenleiters der Zuleitung und/oder des Innenleiters des Hochleistungsschalters dient. Insbesondere kann der Verdampfer des Wärmerohres und der Kondensator des Wärmerohres auf demselben Potential liegen und/oder frei sein von einer zwischen dem Verdampfer und dem Kondensator vorgesehenen lsolationsstrecke. Ein entsprechendes Verfahren zur Kühlung eines Innenleiters einer Zuleitung oder eines Innenleiters eines Hochleistungsschalters ist dadurch gekennzeichnet, dass der Innenleiter mittels eines Wärmerohres gekühlt wird.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen schematisch:
- Fig. 1: einen dreipoligen Generatorschalter, wobei drei verschiedene Arten der Anordnung des Wärmerohres dargestellt sind, geschnitten;
- Fig. 2: eine Hochspannungsanlage mit einem Hochleistungsschalter oder Schalterpol und zwei Zuleitungen, wobei der Innenleiter des Hochleistungsschalters mehrere Abschnitte aufweist und mit mehreren Wärmerohren versehen ist, vorwiegend geschnitten, in Aufsicht;
- Fig. 3: Wärmerohr mit Kühlrippenanordnung und einem Mittel zur thermischen Kopplung von Verdampfer und Innenleiter;
- Fig. 4: Belüftungsschema für eine dreipolige Hochspannungsanlage, wobei Innenleiter nicht dargestellt sind.

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Für das Verständnis der Erfindung nicht wesentliche Teile sind zum Teil nicht dargestellt. Die beschriebenen Ausführungsbeispiele stehen beispielhaft für den Erfindungsgegenstand und haben keine beschränkende Wirkung.

### Wege zur Ausführung der Erfindung

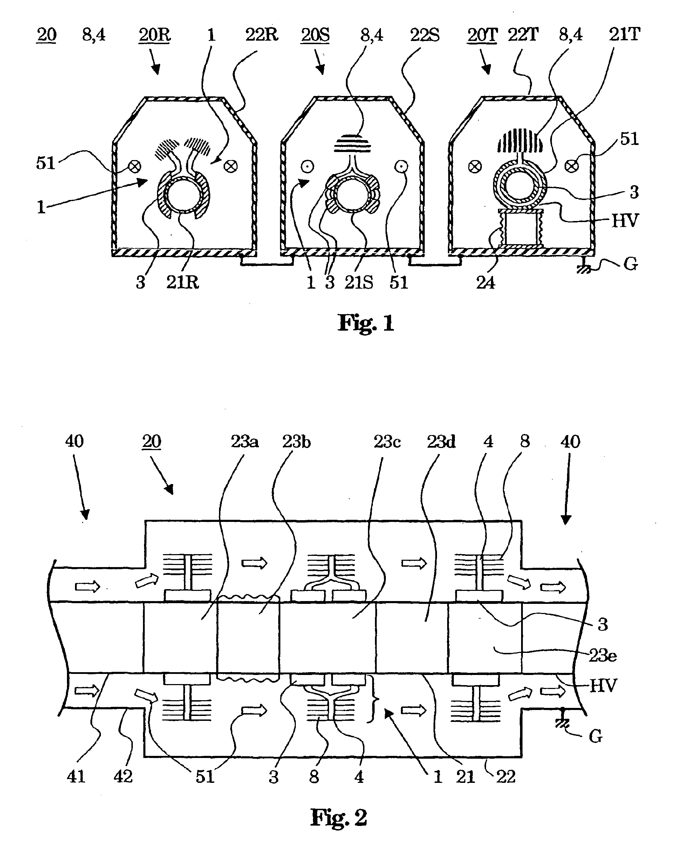

Fig. 1 zeigt schematisch im Schnitt einen dreipoligen Generatorschalter. Jeder der Schalterpole 20R,20S,20T weist einen rohrförmigen Schalter-Innenleiter 21 R,21 S,21T auf, welcher von je einem gehäuseartigen Schalter-Aussenleiter 22R,22S,22T umgeben ist. Im Betriebsfalle liegt zwischen dem Schalter-Innenleiter und dem jeweiligen Schalter-Aussenleiter eine Hochspannung HV an, wobei der Aussenleiter auf Erdpotential G liegt und den Rückstrom führt. Im allgemeinen sind die drei Pole, anders als in Fig. 1 dargestellt, in einem gemeinsamen Sternpunkt geerdet. Da der Schalter-Innenleiter gehäust ist und im allgemeinen einen kleineren Querschnitt als der Aussenleiter aufweist, entsteht am Schalter-Innenleiter eine abzuführende Verlustwärme, während der Aussenleiter, der der Umgebungsluft ausgesetzt ist, sich relativ wenig erwärmt. An berührbaren Stellen darf ein Hochleistungsschalter im allgemeinen nicht wärmer als 70°C oder 80°C werden.

Zuleitungen zur Herstellung einer elektrischen Verbindung zu dem Hochleistungsschalter 20 sind in Fig. 1 nicht sichtbar. Eine solche Zuleitung weist einen Zuleitungs-Innenleiter und einen diesen Zuleitungs-Innenleiter umgebenden Zuleitungs-Aussenleiter auf. Im weiteren werden die Worte Innenleiter und Aussenleiter auch ohne den Zusatz "Schalter-" oder "Zuleitungs-" verwendet, wobei sich aus dem Zusammenhang ergibt, ob ein Zuleitungs-Innenleiter / -Aussenleiter oder ein Schalter -Innenleiter /-Aussenleiter gemeint ist oder ob beide Sorten gemeint sein können.

Zur Abführung der Verlustwärme der Innenleiters wird jeder der Innenleiter 21 R,21S,21T mittels (mindestens) eines Wärmerohrs 1 gekühlt. Typischerweise wird jeder Pol eines Hochleistungsschalters mittels eines ähnlich angeordneten und ausgebildeten Wärmerohres 1 gekühlt; in Fig. 1 ist allerdings in jedem Pol eine andere Wärmerohranordnung dargestellt. jedes Wärmerohr 1 enthäit ein Arbeitsmedium, das in einem als Verdampfer 3 bezeichneten Abschnitt des Wärmerohres 1 verdampft wird und in einem als Kondensator 4 bezeichneten Abschnitt des Wärmerohres 1 kondensiert wird.

### R-Pol (links in Fig. 1):

Der Verdampfer 3 weist zwei im wesentlichen hohlzylindersegmentförmige metallische Elemente (beispielsweise aus Aluminium) auf, deren Form an die Gestalt des Innenleiters 21 R angepasst ist, und die in gutem thermischen Kontakt mit dem Innenleiter 21 R an diesem befestigt sind. Die Elemente sind eine mögliche Ausführungsform von Mitteln zur thermischen Kopplung von Verdampfer und Innenleiter. Die Elemente sind hier als Hohlkörper ausgebildet und mit vorwiegend flüssigem Arbeitsmedium gefüllt. Die Hohlkörper sind Teil jeweils eines Wärmerohres 1.

Ein vorzugsweise metallisches Rohrstück verbindet jeden der Verdampfer 3 mit jeweils einem Kondensator 4. Ein solcher Kondensator 4 weist eine vorzugsweise metallische Kühlrippenanordnung 8 auf, welche in dem Raum zwischen Innenleiter 21 und Aussenleiter 22 angeordnet ist und vorteilhaft ein Röhrensystem aufweist (nicht dargestellt), in welchem sich das gasförmige Arbeitsmedium ausbreiten kann, um dann darin zu kondensieren und wieder zum Verdampfer 3 zurückzufliessen. Mit Vorteil sind Teile eines solchen Röhrensystems in zumindest einem Teil der Kühlrippen angeordnet. Als Mittel zur Wärmeabgabe 8 kann beispielsweise auch ein Wärmetauscher eingesetzt werden.

Die Kühlrippenanordnung 8 ist in thermischem Kontakt mit einem Kühlgas, welches zur Erzielung einer forcierten Kühlung entlang der Erstreckung des Innenleiters 21 bewegt wird. Typischerweise wird Luft als Kühlgas verwendet. Mittels eines nicht-dargestellten Gebläses wird eine Kühlgasströmüng 51 erzeugt. Die mit einem Kreuz beziehungsweise einem Punkt (Fig. 1 mitte) versehenen Kreise geben die Richtung der Kühlgasströmung 51 an: in die Zeichenebene hinein beziehungsweise aus der Zeichenebene hinaus. Es ist auch denkbar, mindestens einen Verdampfer 3 innerhalb des Innenleiters 21 anzuordnen, und vorteilhaft dann (auch) eine Kühlgasströmung innerhalb des Innenleiters 21 vorzusehen.

Die Mittel zur Wärmeabgabe 8 sind so ausgerichtet und ausgestaltet, dass sie stark von der Strömung 51 durchsetzt sind, so dass eine optimierte Kühlleistung zu erzielbar ist. Die Grösse und Anordnung des Kondensators 4 und der Mittel zur Wärmeabgabe 8 ist allerdings dadurch stark begrenzt, dass in dem dielektrisch belasteten Raum zwischen Innenleiter 21 und Aussenleiter 22 keine solchen Feldüberhöhungen erzeugt werden dürfen, die zu ungewollten Durchschlägen führen könnten. Da die Kühlrippenanordnungen 8 im allgemeinen auf dem gleichen Potential liegen wie der Innenleiter 21, werden sie vorteilhaft nahe dem Innenleiter 21 angeordnet und sind ausserdem vorteilhaft abgerundet ausgebildet, wie es auch in Fig. 1 dargestellt ist.

### S-Pol (mitte in Fig. 1):

Der Verdampfer 3 weist zwei mal zwei im wesentlichen hohlzylindersegmentförmige metallische Elemente auf, deren Form an die Gestalt des Innenleiters 21 S angepasst ist, und die in gutem thermischen Kontakt mit dem Innenleiter 21 S an diesem befestigt sind. Diese Elemente sind mit vorwiegend flüssigem Arbeitsmedium gefüllt und durch zu einem Wärmerohr 1 gehörende vorzugsweise metallische Rohre miteinander verbunden. An dem Aussenleiter 22S können ebene flächige Abschnitte vorgesehen sein, an welchen die Elemente mit dem Innenleiter 21 S in Kontakt gebracht werden, beispielsweise durch Schrauben.

Statt der in Fig. 1 links und mitte dargestellten 1 und 4 Elemente kann ein Wärmerohr 1 auch 2,3,5,6,7,8 oder mehr Elemente aufweisen, die Wärme des Innenleiters 21 aufnehmen.

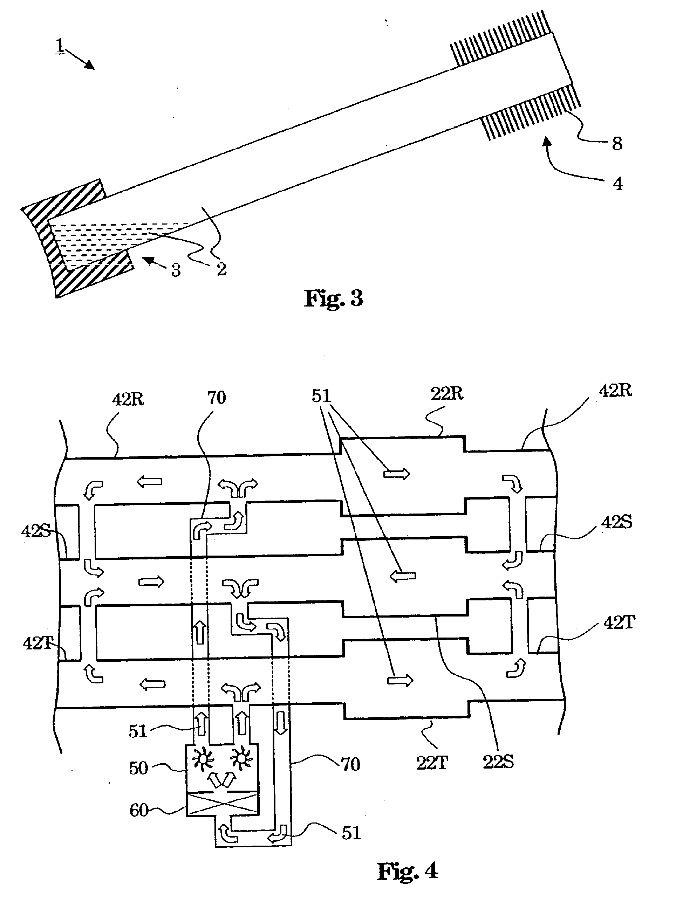

Die Strömungsrichtung im mittleren Pol (S-Pol) ist vorteilhaft der Richtung der Strömung 51 in den anderen Polen entgegengesetzt (siehe Bezugszeichen 51). Ein entsprechendes Belüftungsschema ist in Fig. 4 dargestellt.

### T-Pol (Fig. 1 rechts):

Beim T-Pol ist der Verdampfer 3 in den Innenleiter 21T integriert in Form von vorzugsweise röhrenförmigen Volumina, die innerhalb des Innenleiterquerschnittes vorgesehen sind. Dadurch ist eine sehr gute thermische Kopplung zwischen Innenleiter 21T und Verdampfer 3 gegeben. (Der Innenleiter 21 T ist in Fig. 1 beim T-Pol grösser und dicker dargestellt als bei den anderen Polen.)

Während in Fig. 1 der Kondensator 4 stets oberhalb des Verdampfers 3 angeordnet ist, so dass das entsprechende Wärmerohr 1 als Thermosiphon ausgebildet ist, ist auch der Fall denkbar, dass der Kondensator 4 unterhalb des Verdampfers 3 angeordnet ist. Zumindest in diesem Falle ist ein Mittel zur Rückführung von kondensiertem Arbeitsmedium zum Verdampfer vorzusehen. Dieses kann vorzugsweise mittels Kapillarkräften arbeiten. Beim T-Pol ist ein Stützisolator 14 dargestellt, welcher den Innenleiter 21 T stützt.

Fig. 2 zeigt schematisch eine teilweise geschnittene Aufsicht auf eine Hochspannungsanlage, die einen Schalter oder Schalterpol 20 aufweist, der ähnlich dem R-Pol aus Fig. 1 aufgebaut ist. Der Schalter-Innenleiter 21 weist mehrere Abschnitte 23a bis 23e auf, von denen mehrere (drei) mit im wesentlichen symmetrisch angeordneten zwei Wärmerohren 1 versehen sind.

Der Abschnitt 23a ist ein Anschlussgehäuse 23a, welches dem Anschluss des Schalters 20 an die Generatorableitung dient. Das Anschlussgehäuse 23a ist mittels zweier Wärmerohre 1 gekühlt, die Kühlrippen 8 aufweisen. Der Abschnitt 23b ist eine Löschkammer, die der Kontakttrennung und Lichtbogenlöschung dient. Daran schliesst das Antriebsgehäuse 23c an, in welchem ein Antrieb zur Ermöglichung der Kontakttrennung in der Löschkammer 23b angeordnet ist. Das Antriebsgehäuse 23c ist durch zwei Wärmerohre 1 gekühlt, welche je zwei am Antriebsgehäuse 23c befestigte und mit diesem in gutem thermischen Kontakt stehende Elemente (Hohlkörper) aufweisen.

Anschliessend an das Antriebsgehäuse 23c ist ein bewegliches Trennerrohr 23d vorgesehen, das der Erzeugung einer sichtbaren Trennstrecke dient. Daran anschliessend ist ein Trennergehäuse 23e vorgesehen, das der Aufnahme des Trennerrohres dient. Das Trennergehäuse 23e ist hier in gleicher Weise gekühlt wie das Anschlussgehäuse 23a.

Die Luftströmung 51 und ihre Richtung ist durch offene Pfeile symbolisiert.

Der Hochleistungsschalter oder Schalterpol 20 ist mit zwei Zuleitungen 40 verbunden, die jeweils einen rohrförmigen Innenleiter 41 und einen den Innenleiter 41 koaxial umgebenden rohrförmigen Aussenleiter 42 aufweisen.

Die eine Zuleitung 40 stellt vorteilhaft eine Verbindung zu einem Generator her, während die andere Zuleitung 40 eine Verbindung zu einem Block-Transformator oder Maschinentransformator herstellt.

In Fig. 3 ist schematisch ein Wärmerohr 1 dargestellt. Es ist hermetisch geschlossen, so dass ein geschlossener Kreislauf innerhalb des Wärmerohres vorliegt und (praktisch) keine Wartung notwendig ist. Der Verdampfer 3 weist ein Element auf, das der thermischen Ankopplung an einen zu kühlenden Körper (beispielsweise einen Schalter-Innenleiter) dient. Das Arbeitsmedium ist mit dem Bezugszeichen 2 versehen. Es liegt in flüssigem Zustand (gestrichelt schraffiert) und in gasförmigem Zustand (nicht schraffiert) vor. Der Kondensator 4 des Wärmerohrs 1 aus Fig. 3 ist mit Kühlrippen 8 versehen.

Der Arbeitstemperaturbereich, für den ein Wärmerohr 1 zu konstruieren ist, kann dadurch vorgegeben sein, dass in der anvisierten Anwendung dieser Temperaturbereich durch eine minimale (Tₘᵢₙ) und eine maximale Arbeitstemperatur (Tₘₐₓ) vorgegeben ist. Beispielsweise bei einer Anwendung in einem typischen Hochleistungsschalter, beispielsweise Generatorschalter, ist ein Bereich mit Tₘᵢₙ = -40° C und Tₘₐₓ = +60° C oder Tₘᵢₙ = -25° C und Tmax = +60° C möglich.

Geeignete Arbeitsmedien 2 sind beispielsweise Wasser, Aceton, fluorierte Kohlenwasserstoffe wie zum Beispiel "FC-72" der Firma 3M, oder Hydro-Fluor-Ether wie beispielsweise "HFE-7100" der Firma 3M. Die mittels eines Wärmerohres 1 abgeführte Wärmeleistung beträgt typischerweise zwischen 0.5 kW und 1.5 kW.

Es ist möglich, zwischen Verdampfer 3 und Kondensator 4 eine elektrische lsolierstrecke vorzusehen, so dass Verdampfen und Kondensieren auf verschiedenen elektrischen Potentialen stattfinden kann. Beispielsweise kann dann der Kondensator mit dem Aussenleiter elektrisch verbunden sein, während der Verdampfer mit dem Innenleiter elektrisch verbunden ist. Auf eine solche lsolierstrecke kann aber auch verzichtet werden.

Alternativ oder zusätzlich zum Vorsehen mindestens eines Wärmerohres am Schalter-Innenleiter kann auch mindestens ein Wärmerohr an einem Zuleitungs-Innenleiter vorgesehen werden, und die Stromtragfähigkeit der Zuleitung zu erhöhen.

Ein Wärmerohr kann auch mehrere miteinander verbundene, beispielsweise zwei schlaufenartig miteinander verbundene Hohlteile aufweisen. Beispielsweise kann in einem Hohlteil das verdampfte Arbeitsmedium zum Kondensator strömen, während in einem anderen Hohlteil das kondensierte Arbeitsmedium zum Verdampfer zurückfliesst.

Fig. 4 zeigt schematisch ein Belüftungsschema für eine dreipolige Hochspannungsanlage mit je zwei Zuleitungen und einem Schalterpol pro Pol (R,S,T). Es handelt sich um ein geschlossenes Belüftungssystem mit Luft als Kühlgas. Es sind nur die Aussenleiter 22,42 dargestellt, da zugunsten der Klarheit der Darstellung auf die Darstellung der Innenleiter verzichtet wurde.

Ein Gebläse 50, das vorteilhaft einen oder mehrere Ventilatoren aufweist, bewegt Luft durch vorteilhaft elektrisch isolierende Belüftungsleitungen 70 in die zwei äusseren Schalterpole (R und T) hinein. Dort bewegt sich der Lufstrom 51 im wesentlichen entlang der Erstreckung der Innenleiter, um dann, über weitere Belüftungsleitungen 70, in den mittleren Schalterpol (S-Pol) zu gelangen. Dort bewegt sich der Lufstrom 51 ebenfalls im wesentlichen entlang der Erstreckung der Innenleiter, allerdings in die entgegengesetzte Richtung wie in den beiden anderen Polen. Über eine weitere Belüftungsleitung 70 tritt das Kühlgas dann aus dem Schalterpol aus und wird mittels eines Kühlaggregates 60 gekühlt. Nachdem das Gas die an den Innenleitern aufgenommene Wärmeenergie im Kühlaggregat wieder abgegeben hat, wird es wieder mittels des Gebläses 50 beschleunigt und den beiden äusseren Polen R,T zugeführt, und der Kreislauf beginnt von neuem.

Andere Möglichkeiten zur Erzeugung eines Kühlgasstromes 51 sind denkbar. Beispielsweise kann auch eine Durchzugsbelüftung vorgesehen werden, welche Umgebungsluft einsaugt und in die Aussenleiter einbäst, und wobei die Luft dann nach Aufnahme von Verlustwärme der oder des Innenleiters aus dem Aussenleiter wieder austritt. In diesem Fall ist die Richtung der Kühlgasströmung vorteilhaft in allen Polen entlang der gleichen Richtung verlaufend.

Die pro Zeit durch einen Schalterpol bewegte Luftmenge liegt typischerweise zwischen 2 m³/s und 10 m³/s, vorteilhaft zwischen 4 m³/s und 8 m³/s.

Die Rohrdurchmesser typischer Innenleiter liegt zwischen 30 cm und 60 cm, insbesondere zwischen 40 cm und 50 cm. Typische Aussenleiter-Durchmesser betragen 80 cm bis 1.3 m.

### Bezugszeichenliste

- 1: Wärmerohr
- 2: Arbeitsmedium
- 3: Verdampfer
- 4: Kondensator
- 8: Vorrichtung zur Wärmeabgabe, Wärmetauscher, Kühlrippenanordnung, Radiator
- 20: Hochleistungsschalter, Schalterpol, Generatorschalter
- 20R,20S,20T: Schalterpol
- 21: Schalter-Innenleiter, Rohrleiter
- 21R,21S,21T: Schalter-Innenleiter
- 22: Schalter-Aussenleiter, Schalter-Kapselung, Schaltergehäuse
- 22R,22S,22T: Schalter-Aussenleiter
- 23: Abschnitt des Innenleiters
- 23a: Anschlussgehäuse
- 23b: Löschkammer
- 23c: Antriebsgehäuse
- 23d: bewegliches Trennerrohr
- 23e: Trennergehäuse
- 24: Stützisolator
- 40: Zuleitung
- 41: Zuleitungs-Innenleiter, Rohrleiter
- 42: Zuleitungs-Aussenleiter, Rohrleite
- 42R,42S,42T: Zuleitungs-Aussenleiter
- 50: Kühlgasstromerzeugungsmittel, Luftstromerzeugungsmittel, Gebläse, Ventilator
- 51: Kühlgasstrom, Luftstrom
- 60: Kühlaggregat
- 70: Kühlgasleitung, Belüftungsleitung

- G: Erdpotential
- HV: Hochspannung, Hochspannungspotential
- R,S,T: Pol

## Patentansprüche

1. Hochspannungsanlage aufweisend mindestens eine Zuleitung (40) und mindestens einen Hochleistungsschalter (20), wobei der Hochleistungsschalter (20) einen länglich erstreckten Schalter-Innenleiter (21) und einem gehäuseartig den Schalter-Innenleiter (21) umgebenden Schalter-Aussenleiter (22) aufweist, wobei zum Abführen von Wärmeenergie des Schalter-Innenleiters (21) mindestens ein Wärmerohr (1) vorgesehen ist, welches Wärmerohr (1) ein Arbeitsmedium (2) zum Abführen der Wärmeenergie durch Verdampfen des Arbeitsmediums (2) in einem als Verdampfer (3) bezeichneten Abschnitt des Wärmerohres (1) und Kondensieren des Arbeitsmediums (2) in einem als Kondensator (4) bezeichneten Abschnitt des Wärmerohres (1) beinhaltet, wobei die mindestens eine Zuleitung (40) einen länglich erstreckten Zuleitungs-Innenleiter (41) und einen den Zuleitungs-Innenleiter (41) umgebenden Zuleitungs-Aussenleiter (42) aufweist, und wobei die Innenleiter (21,41) miteinander und die Aussenleiter (22,42) miteinander elektrisch leitend verbunden sind, **dadurch gekennzeichnet, dass** der Kondensator (4) zum Zusammenwirken mit einem innerhalb des Schalter-Aussenleiters (22) verlaufenden Kühlgasstrom (51) vorgesehen ist.

2. Hochspannungsanlage gemäss Anspruch 1 aufweisend einen Hochleistungsschalter gemäss einem der Ansprüche 13 bis 20.

3. Hochspannungsanlage gemäss Anspruch 1 oder 2, **dadurch gekennzeichnet, dass** mindestens ein Kühlgasstromerzeugungsmittel (50) vorgesehen ist, mittels dessen innerhalb des Schalter-Aussenleiters (22) ein im wesentlichen entlang der Erstreckung des Schalter-Innenleiters (21) verlaufender Kühlgasstrom (51) erzeugbar ist.

4. Hochspannungsanlage gemäss einem der Ansprüche 1 bis 3 , **dadurch gekennzeichnet, dass** der Verdampfer (3) in engem thermischen Kontakt mit dem Schalter-Innenleiter (21) steht.

5. Hochspannungsanlage gemäss Anspruch 4, **dadurch gekennzeichnet, dass** der Kondensator (4) eine Vorrichtung zur Wärmeabgabe (8) aufweist, welche mit dem Kühlgasstrom (51) zusammenwirkend ist.

6. Hochspannungsanlage gemäss Anspruch 5, **dadurch gekennzeichnet, dass** die Vorrichtung zur Wärmeabgabe (8) eine Kühlrippenanordnung (8) ist, welche Kühlrippen aufweist, welche im wesentlichen entlang der Erstreckung des Schalter-Innenleiters (21,41) verlaufend sind.

7. Hochspannungsanlage gemäss einem der vorangegangenen Ansprüche, **dadurch gekennzeichnet, dass** der Kühlgasstrom (51) innerhalb des Schalter-Aussenleiters (22) und innerhalb des Zuleitungs-Aussenleiters (42) im wesentlichen entlang der Erstreckung des jeweiligen Innenleiters (21,41) verlaufend ist.

8. Hochspannungsanlage gemäss einem der vorangegangenen Ansprüche, **dadurch gekennzeichnet, dass** der Schalter-Innenleiter (21), der Zuleitungs-Innenleiter (41) und der Zuleitungs-Aussenleiter (42) im wesentlichen hohlzylindrisch ausgebildet ist.

9. Hochspannungsanlage gemäss einem der vorangegangenen Ansprüche, **dadurch gekennzeichnet, dass** der Schalter-Innenleiter (21) zu dem Schalter-Aussenleiter (22) und/oder der Zuleitungs-Innenleiter (41) zu dem Zuleitungs-Aussenleiter (42) im wesentlichen koaxial verlaufend ist.

10. Hochspannungsanlage gemäss einem der vorangegangenen Ansprüche, **dadurch gekennzeichnet, dass** sie mehrere Pole (R,S,T) mit je zwei Zuleitungen (40R,40S,40T) und je einem mindestens ein Wärmerohr (1) aufweisenden Hochleistungsschalter (20R,20S,20T) beinhaltet.

11. Hochspannungsanlage gemäss einem der vorangegangenen Ansprüche, **dadurch gekennzeichnet, dass** sie eine längsbeblasene Generatorableitung ist.

12. Hochspannungsanlage gemäss Anspruch 1 oder 2, **dadurch gekennzeichnet, dass** zusätzlich mindestens ein Wärmerohr (1) an dem Zuleitungs-Innenleiter (41) vorgesehen ist.

13. Hochleistungsschalter (20) mit einem länglich erstreckten Schalter-Innenleiter (21) und einem gehäuseartig den Schalter-Innenleiter (21) umgebenden Schalter-Aussenleiter (22),
wobei zum Abführen von Wärmeenergie des Schalter-Innenleiters (21) mindestens ein Wärmerohr (1) vorgesehen ist, welches Wärmerohr (1) ein Arbeitsmedium (2) zum Abführen der Wärmeenergie durch Verdampfen des Arbeitsmediums (2) in einem als Verdampfer (3) bezeichneten Abschnitt des Wärmerohres (1) und Kondensieren des Arbeitsmediums (2) in einem als Kondensator (4) bezeichneten Abschnitt des Wärmerohres (1) beinhaltet, **dadurch gekennzeichnet, dass**
der Kondensator (4) zum Zusammenwirken mit einem innerhalb des Schalter-Aussenleiters (22) verlaufenden Kühlgasstrom (51) vorgesehen ist.

14. Hochleistungsschalter (20) gemäss Anspruch 13, **dadurch gekennzeichnet, dass** das Wärmerohr (1) auf dem Potential des Innenleiters (21) liegt.

15. Hochleistungsschalter (20) gemäss Anspruch 13, **dadurch gekennzeichnet, dass** das Wärmerohr (1) als Thermosiphon ausgebildet ist.

16. Hochleistungsschalter (20) gemäss Anspruch 13, **dadurch gekennzeichnet, dass** der Verdampfer (3) in den Innenleiter (21) integriert ist.

17. Hochleistungsschalter (20) gemäss Anspruch 13 oder 14, **dadurch gekennzeichnet, dass** der Innenleiter mehrere Abschnitte aufweist, die jeweils mit mindestens einem Wärmerohr (1) versehen sind.

18. Hochleistungsschalter (20) gemäss Anspruch 13 oder 14, **dadurch gekennzeichnet, dass** der Verdampfer (3) zwei im wesentlichen hohlzylindersegmentförmige metallische Elemente aufweist, deren Form an die Gestalt des Innenleiters angepasst ist, und die in gutem thermischen Kontakt mit dem Innenleiter an diesem befestigt sind.

19. Hochleistungsschalter (20) gemäss Anspruch 18, **dadurch gekennzeichnet, dass** die Kühlrippenanordnung (8) nahe dem Innenleiter (21) angeordnet ist und abgerundet ausgebildet ist.

20. Hochleistungsschalter (20) gemäss Anspruch 13 oder 14, **dadurch gekennzeichnet, dass** zwischen Verdampfer (3) und Kondensator (4) eine elektrische Isolierstrecke vorgesehen ist, so dass Verdampfen und Kondensieren auf verschiedenen elektrischen Potentialen stattfindet.

21. Verfahren zum Kühlen eines länglich erstreckten und von einem Schalter-Aussenleiter (22) gehäuseartig umgebenen Schalter-Innenleiters (21) eines Hochleistungsschalters (20) gemäss Anspruch 13, wobei ein Arbeitsmedium (2) durch Aufnahme von Wärmeenergie des Schalter-Innenleiters (21) verdampft wird und unter Abgabe von Wärme in einem als Kondensator (4) bezeichneten Abschnitt des Wärmerohres (1) kondensiert wird, **dadurch gekennzeichnet, dass** der Kondensator (4) innerhalb des Schalter-Aussenleiters (22) durch einen im wesentlichen entlang der Erstreckung des Schalter-Innenleiters (21) verlaufenden Kühlgasstrom (51) gekühlt wird.

## Claims

1. High-voltage installation, having at least one feed line (40) and at least one heavy-duty circuit breaker (20), wherein the heavy-duty circuit breaker (20) has a longitudinally extended circuit breaker inner conductor (21) and a circuit breaker outer conductor (22) surrounding the circuit breaker inner conductor (21) in the manner of a housing, wherein, in order to dissipate thermal energy from the circuit breaker inner conductor (21), at least one heat pipe (1) is provided, which heat pipe (1) contains a working medium (2) for dissipating the thermal energy by evaporating the working medium (2) in a section of the heat pipe (1) referred to as evaporator (3) and condensing the working medium (2) in a section of the heat pipe (1) referred to as condenser (4), wherein the at least one feed line (40) has a longitudinally extended feed line inner conductor (41) and a feed line outer conductor (42), which surrounds the feed line inner conductor (41), and wherein the inner conductors (21, 41) are electrically conductively connected to one another and the outer conductors (22, 42) are electrically conductively connected to one another, **characterized in that** the condenser (4) is provided for interacting with a cooling gas flow (51) passing within the circuit breaker outer conductor (22).

2. High-voltage installation according to Claim 1, having a heavy-duty circuit breaker according to one of Claims 13 to 20.

3. High-voltage installation according to Claim 1 or 2, **characterized in that** at least one cooling gas flow generation means (50) is provided, by means of which a cooling gas flow (51) passing substantially along the extent of the circuit breaker inner conductor (21) can be generated within the circuit breaker outer conductor (22).

4. High-voltage installation according to one of Claims 1 to 3, **characterized in that** the evaporator (3) is in close thermal contact with the circuit breaker inner conductor (21).

5. High-voltage installation according to Claim 4, **characterized in that** the condenser (4) has an apparatus for heat emission (8), which interacts with the cooling gas flow (51).

6. High-voltage installation according to Claim 5, **characterized in that** the apparatus for heat emission (8) is a cooling rib arrangement (8) which has cooling ribs which pass substantially along the extent of the circuit breaker inner conductor (21, 41).

7. High-voltage installation according to one of the preceding claims, **characterized in that** the cooling gas flow (51) passes within the circuit breaker outer conductor (22) and within the feed line outer conductor (42) substantially along the extent of the respective inner conductor (21, 41).

8. High-voltage installation according to one of the preceding claims, **characterized in that** the circuit breaker inner conductor (21), the feed line inner conductor (41) and the feed line outer conductor (42) are substantially hollow-cylindrical.

9. High-voltage installation according to one of the preceding claims, **characterized in that** the circuit breaker inner conductor (21) passes substantially coaxially with respect to the circuit breaker outer conductor (22) and/or the feed line inner conductor (41) passes substantially coaxially with respect to the feed line outer conductor (42).

10. High-voltage installation according to one of the preceding claims, **characterized in that** it contains a plurality of poles (R, S, T), each having two feed lines (40R, 40S, 40T) and each having a heavy-duty circuit breaker (20R, 20S, 20T) having at least one heat pipe (1).

11. High-voltage installation according to one of the preceding claims, **characterized in that** it comprises a longitudinally blown generator output line.

12. High-voltage installation according to Claim 1 or 2, **characterized in that**, in addition, at least one heat pipe (1) is provided on the feed line inner conductor (41).

13. Heavy-duty circuit breaker (20) comprising a longitudinally extended circuit breaker inner conductor (21) and a circuit breaker outer conductor (22) surrounding the circuit breaker inner conductor (21) in the manner of a housing, wherein, in order to dissipate thermal energy from the circuit breaker inner conductor (21), at least one heat pipe (1) is provided, which heat pipe (1) contains a working medium (2) for dissipating the thermal energy by evaporating the working medium (2) in a section of the heat pipe (1) referred to as evaporator (3) and condensing the working medium (2) in a section of the heat pipe (1) referred to as condenser (4), **characterized in that** the condenser (4) is provided for interacting with a cooling gas flow (51) passing within the circuit breaker outer conductor (22).

14. Heavy-duty circuit breaker (20) according to Claim 13, **characterized in that** the heat pipe (1) is at the potential of the inner conductor (21).

15. Heavy-duty circuit breaker (20) according to Claim 13, **characterized in that** the heat pipe (1) is in the form of a thermosyphon.

16. Heavy-duty circuit breaker (20) according to Claim 13, **characterized in that** the evaporator (3) is integrated in the inner conductor (21).

17. Heavy-duty circuit breaker (20) according to Claim 13 or 14, **characterized in that** the inner conductor has a plurality of sections, which are each provided with at least one heat pipe (1).

18. Heavy-duty circuit breaker (20) according to Claim 13 or 14, **characterized in that** the evaporator (3) has two metallic elements substantially in the form of hollow cylinder segments, whose shape is matched to the configuration of the inner conductor and which are fastened on the inner conductor so as to be in good thermal contact therewith.

19. Heavy-duty circuit breaker (20) according to Claim 18, **characterized in that** the cooling rib arrangement (8) is arranged close to the inner conductor (21) and is rounded.

20. Heavy-duty circuit breaker (20) according to Claim 13 or 14, **characterized in that** an electrical insulating gap is provided between the evaporator (3) and the condenser (4), with the result that evaporation and condensation take place at different electrical potentials.

21. Method for cooling a longitudinally extended circuit breaker inner conductor (21), which is surrounded by a circuit breaker outer conductor (22) in the manner of a housing, of a heavy-duty circuit breaker (20) according to Claim 13, wherein a working medium (2) is evaporated by virtue of thermal energy from the circuit breaker inner conductor (21) being absorbed and is condensed with emission of heat inner section of the heat pipe (1) referred to as condenser (4), **characterized in that** the condenser (4) is cooled within the circuit breaker outer conductor (22) by a cooling gas flow (51) passing substantially along the extent of the circuit breaker inner conductor (21).

## Revendications

1. Équipement à haute tension présentant au moins une ligne d'arrivée (40) et au moins un commutateur de forte puissance (20), le commutateur de forte puissance (20) présentant un conducteur interne de commutateur (21) qui s'étend dans le sens longitudinal et un conducteur externe de commutateur (22) qui entoure le conducteur interne de commutateur (21) à la manière d'un boîtier, au moins un caloduc (1) étant prévu pour évacuer l'énergie thermique du conducteur interne de commutateur (21), lequel caloduc (1) contient un fluide de travail (2) pour évacuer l'énergie thermique par évaporation du fluide de travail (2) dans une portion du caloduc (1) appelée évaporateur (3) et condensation du fluide de travail (2) dans une portion du caloduc (1) appelée condenseur (4), l'au moins une ligne d'arrivée (40) présentant un conducteur interne de ligne d'arrivée (41) qui s'étend dans le sens longitudinal et un conducteur externe de ligne d'arrivée (42) qui entoure le conducteur interne de ligne d'arrivée (41), et les conducteurs internes (21, 41) étant reliés de manière électriquement conductrice entre eux et les conducteurs externes (22, 42) étant reliés de manière électriquement conductrice entre eux, **caractérisé en ce que** le condenseur (4) est prévu pour coopérer avec un courant de gaz de refroidissement (51) qui s'étend à l'intérieur du conducteur externe de commutateur (22).

2. Équipement à haute tension selon la revendication 1, présentant un commutateur de forte puissance selon l'une des revendications 13 à 20.

3. Équipement à haute tension selon la revendication 1 ou 2, **caractérisé en ce qu'**il est prévu au moins un moyen générateur de gaz de refroidissement (50) à l'aide duquel peut être généré à l'intérieur du conducteur externe de commutateur (22) un courant de gaz de refroidissement (51) qui s'étend pour l'essentiel le long de la projection du conducteur interne de commutateur (21).

4. Équipement à haute tension selon l'une des revendications 1 à 3, **caractérisé en ce que** l'évaporateur (3) se trouve en contact thermique étroit avec le conducteur interne de commutateur (21).

5. Équipement à haute tension selon la revendication 4, **caractérisé en ce que** le condenseur (4) présente un dispositif de dissipation de chaleur (8) qui coopère avec le courant de gaz de refroidissement (51).

6. Équipement à haute tension selon la revendication 5, **caractérisé en ce que** le dispositif de dissipation de chaleur (8) est un arrangement d'ailettes de refroidissement (8) qui présente des ailettes de refroidissement, lesquelles s'étendent pour l'essentiel le long de la projection du conducteur interne de commutateur (21, 41).

7. Équipement à haute tension selon l'une des revendications précédentes, **caractérisé en ce que** le courant de gaz de refroidissement (51) à l'intérieur du conducteur externe de commutateur (22) et à l'intérieur du conducteur externe de ligne d'arrivée (42) s'étend pour l'essentiel le long de la projection du conducteur interne (21, 41) correspondant.

8. Équipement à haute tension selon l'une des revendications précédentes, **caractérisé en ce que** le conducteur interne de commutateur (21), le conducteur interne de ligne d'arrivée (41) et le conducteur externe de ligne d'arrivée (42) sont pour l'essentiel de forme cylindrique creuse.

9. Équipement à haute tension selon l'une des revendications précédentes, **caractérisé en ce que** le conducteur interne de commutateur (21) s'étend pour l'essentiel de manière coaxiale par rapport au conducteur externe de commutateur (22) et/ou le conducteur interne de ligne d'arrivée (41) s'étend pour l'essential de manière coaxiale par rapport au conducteur externe de ligne d'arrivée (42).

10. Équipement à haute tension selon l'une des revendications précédentes, **caractérisé en ce qu'**il comporte plusieurs pôles (R, S, T) dotés de deux lignes d'arrivée (40R, 40S, 40T) chacun et à chaque fois un commutateur de forte puissance (20R, 20S, 20T) présentant au moins un caloduc (1).

11. Équipement à haute tension selon l'une des revendications précédentes, **caractérisé en ce qu'**il est une dérivation de générateur soufflée dans le sens longitudinal.

12. Équipement à haute tension selon la revendication 1 ou 2, **caractérisé en ce qu'**il est en plus prévu au moins un caloduc (1) sur le conducteur interne de ligne d'arrivée (41).

13. Commutateur de forte puissance (20) comprenant un conducteur interne de commutateur (21) qui s'étend dans le sens longitudinal et un conducteur externe de commutateur (22) qui entoure le conducteur interne de commutateur (21) à la manière d'un boîtier, au moins un caloduc (1) étant prévu pour évacuer l'énergie thermique du conducteur interne de commutateur (21), lequel caloduc (1) contient un fluide de travail (2) pour évacuer l'énergie thermique par évaporation du fluide de travail (2) dans une portion du caloduc (1) appelée évaporateur (3) et condensation du fluide de travail (2) dans une portion du caloduc (1) appelée condenseur (4), **caractérisé en ce que** le condenseur (4) est prévu pour coopérer avec un courant de gaz de refroidissement (51) qui s'étend à l'intérieur du conducteur externe de commutateur (22).

14. Commutateur de forte puissance (20) selon la revendication 13, **caractérisé en ce que** le caloduc (1) se trouve au potentiel du conducteur interne (21).

15. Commutateur de forte puissance (20) selon la revendication 13, **caractérisé en ce que** le caloduc (1) est réalisé sous la forme d'un thermosiphon.

16. Commutateur de forte puissance (20) selon la revendication 13, **caractérisé en ce que** l'évaporateur (3) est intégré dans le conducteur interne (21).

17. Commutateur de forte puissance (20) selon la revendication 13 ou 14, **caractérisé en ce que** le conducteur interne présente plusieurs portions qui sont à chaque fois munies d'au moins un caloduc (1).

18. Commutateur de forte puissance (20) selon la revendication 13 ou 14, **caractérisé en ce que** l'évaporateur (3) présente deux éléments métalliques essentiellement en forme de segments de cylindre creux, dont la forme est adaptée à la configuration du conducteur interne et qui sont fixés sur le conducteur interne en bon contact thermique avec celui-ci.

19. Commutateur de forte puissance (20) selon la revendication 18, **caractérisé en ce que** l'arrangement d'ailettes de refroidissement (8) est disposé à proximité du conducteur interne (21) et de configuration arrondie.

20. Commutateur de forte puissance (20) selon la revendication 13 ou 14, **caractérisé en ce qu'**entre l'évaporateur (3) et le condenseur (4) est prévue une section électriquement isolante, de sorte que l'évaporation et la condensation ont lieu à des potentiels électriques différents.

21. Procédé de refroidissement d'un conducteur interne de commutateur (21), qui s'étend dans le sens longitudinal et qui est entouré par un conducteur externe de commutateur (22) à la manière d'un boîtier, d'un commutateur de forte puissance (20) selon la revendication 13, un fluide de travail (2) étant évaporé en absorbant l'énergie thermique du conducteur interne de commutateur (21) et étant condensé en dissipant de la chaleur dans une portion du caloduc (1) appelée condenseur (4), **caractérisé en ce que** le condenseur (4) est refroidi à l'intérieur du conducteur externe de commutateur (22) par un courant de gaz de refroidissement (51) qui s'étend pour l'essentiel le long de la projection du conducteur interne de commutateur (21).
